# EUROPÄISCHE PATENTSCHRIFT

(11) **EP 3 803 793 B1**
(45) Veröffentlichungstag und Bekanntmachung des Hinweises auf die Patenterteilung: **09.03.2022**
(21) Anmeldenummer: 19728869.9
(22) Anmeldetag: 22.05.2019
(51) Int. Cl.: G06T 7/70

(54) **ABSCHÄTZUNG VON ORTSKOORDINATEN VON LICHTQUELLEN IN UMGEBUNGSBILDERN**
ESTIMATION OF POSITION COORDINATES OF LIGHT SOURCES IN IMAGES OF THE SURROUNDING ENVIRONMENT
ESTIMATION DE COORDONNÉES DE LOCALISATION DE SOURCES DE LUMIÈRE SUR DES IMAGES D'ENVIRONNEMENT

(30) Priorität: 04.06.2018 DE 102018208739
(43) Veröffentlichungstag der Anmeldung: 14.04.2021
(73) Patentinhaber: Conti Temic microelectronic GmbH, 90411 Nürnberg (DE)
(72) Erfinder: PANAKOS, Andreas, 90411 Nürnberg (DE); BÜRKER, Martin, 90411 Nürnberg (DE); GLOGER, Charlotte, 90411 Nürnberg (DE); KITTMANN, Frank, 90411 Nürnberg (DE); MEYERS, Moritz, 90411 Nürnberg (DE); FRIEBE, Markus, 90411 Nürnberg (DE)
(74) Vertreter: Continental Corporation
(86) Internationale Anmeldenummer: PCT/DE2019/200045
(87) Internationale Veröffentlichungsnummer: WO 2019/233533

(56) Entgegenhaltungen:
- DE-A1-102011 122 454
- US-A1- 2018 134 289

## Beschreibung

Die Erfindung betrifft eine Vorrichtung und ein Verfahren zur Abschätzung von Ortskoordinaten und der Art von Lichtquellen in Umgebungsbildern, insbesondere bei Umgebungsbildern einer Surround-View-Kamera bei Fahrzeugen. Weiterhin betrifft die Erfindung ein Programmelement und ein computerlesbares Medium.

Verfahren zur Abschätzung von Ortskoordinaten von Lichtquellen in Umgebungsbildern werden beispielsweise verwendet, um bei Anwendungen der sogenannten erweiterten Realität ("augmented reality") ein möglichst realistisches Bild der Umgebung zu erstellen. In jüngerer Zeit werden diese Verfahren insbesondere bei Landfahrzeugen verwendet, um dem Fahrer ein schnelles und intuitionsnahes Bild seiner Umgebung zu vermitteln, in das die Elemente der erweiterten Realität eingeblendet werden. Es wird also ein fotorealistisches Bild der Umgebung benötigt, das in Echtzeit - auch bei hohen Geschwindigkeiten des Fahrzeugs - berechnet wird. Eine besondere Rolle spielen dabei die Abschätzung von Ortskoordinaten und der Art von Lichtquellen in Umgebungsbildern. Als Ortskoordinaten werden dabei zwei- oder dreidimensionale Modelle des Ortes jeder Lichtquelle verstanden. In einigen Ausführungsformen wird unter Ortskoordinaten die Richtung jeder Lichtquelle verstanden. Als Art von Lichtquelle werden dabei Punkt-Lichtquellen oder Richtungs-Lichtquellen verstanden. Richtungs-Lichtquellen ("directional illumination sources") sind dabei typischerweise sehr entfernte Lichtquellen, z.B. die Sonne. Punkt-Lichtquellen ("point illumination sources") sind näher angeordnete Lichtquellen, z.B. Straßenlampen.

Verfahren im Stand der Technik benötigen für diese Berechnungen sehr hohe Rechenleistungen. Beispielsweise betrifft das Dokument DE 10 2011 122 454 A1 ein Verfahren zum Betreiben einer wenigstens eine Kamera aufweisenden Kameraanordnung für ein Fahrzeug. Weiterhin ist eine Vielzahl von Verfahren nur in der Lage, eine einzige Lichtquelle, die als Haupt-Lichtquelle angesehen wird, zu berücksichtigen. Ferner benötigen viele Verfahren Referenz-Objekte zur Abschätzung von Ortskoordinaten einer oder mehrerer Lichtquellen.

Auf diesem Hintergrund es ist Aufgabe der Erfindung, die Nachteile des Standes der Technik wenigstens teilweise zu überwinden.

Diese Aufgabe wird durch den Gegenstand der unabhängigen Patentansprüche gelöst. Weiterbildungen der Erfindung ergeben sich aus den Unteransprüchen und der folgenden Beschreibung.

Die Erfindung umfasst ein Verfahren zur Abschätzung von Ortskoordinaten und der Art einer Lichtquelle in Umgebungsbildern, wobei die Art der Lichtquelle eine Punkt-Lichtquelle oder eine Richtungs-Lichtquelle sein kann. Das Verfahren umfasst folgende Schritte:
a) Erfassen einer Umgebung als Umgebungsbild, mittels einer Kamera. Das Umgebungsbild wird in einigen Ausführungsformen - insbesondere bei bewegten Landfahrzeugen - in regelmäßigen zeitlichen Abständen aufgenommen. Zwischen den einzelnen Aufnahmen kann sich das Fahrzeug bewegen. In einigen Ausführungsformen wird dies dadurch berücksichtigt, dass die errechneten Bilder der erweiterten Realität in geeigneter Weise interpoliert werden, insbesondere unter Berücksichtigung der Geschwindigkeit des Fahrzeugs. Das beschriebene Verfahren wird dabei auf jedes einzelne Umgebungsbild angewandt. Das Umgebungsbild wird beispielsweise in einem Hauptspeicher eines Steuergeräts oder eines Rechners zwischengespeichert. In einigen Ausführungsformen befindet sich dieser Rechner in dem Fahrzeug oder ist mit dem Fahrzeug verbunden.
b) Bestimmen von Flächen erhöhter Helligkeit des Umgebungsbildes, nämlich einer Menge von Pixeln, deren Helligkeit eine vordefinierte Schwelle überschreitet. Die vordefinierte Schwelle kann dabei fest oder variabel sein. In einer Ausführungsform wird die Schwelle von der Gesamthelligkeit oder der maximalen Helligkeit des Umgebungsbildes bestimmt. Dies kann insbesondere bei Umgebungsbildern der Fall sein, die nach Sonnenuntergang aufgenommen wurden.
   Das erfasste Umgebungsbild wird daraufhin analysiert, ob die Menge von Pixeln zusammenhängend ist oder nicht-zusammenhängend. Ist die Menge von Pixeln zusammenhängend, dann wird dies als eine (zusammenhängende) Fläche erhöhter Helligkeit angesehen. Ist die Menge von Pixeln nicht-zusammenhängend, dann wird angenommen, dass das erfasste Umgebungsbild mehrere, getrennte Lichtquellen aufweist. Ist dies der Fall, dann werden die folgenden Schritte auf jede einzelne Lichtquelle angewandt. In einigen Ausführungsformen wird ein Mindestabstand zwischen nicht-zusammenhängenden Pixeln vordefiniert, so dass nicht-zusammenhängende Pixel erst ab diesem Mindestabstand zu der Annahme von mehreren, getrennten Lichtquellen führen.
c) Bestimmen, aus den Flächen erhöhter Helligkeit, nach einem ersten Berechnungsverfahren, von Ortskoordinaten der Lichtquelle. Die Flächen erhöhter Helligkeit weisen dabei einen Rand auf, welcher durch die vordefinierte Schwelle der Helligkeit bestimmt ist. In einigen Ausführungsformen kann der Rand zwischen einem Pixel, das die Schwelle überschreitet, und einem benachbarten Pixel, das die Schwelle unterschreitet, bestimmt werden. Bei einigen Ausführungsformen kann der Rand geglättet werden.
   Nach der Berechnung des Randes der Flächen erhöhter Helligkeit wird, nach einem ersten Berechnungsverfahren, die Mitte der Flächen erhöhter Helligkeit bestimmt. Das erste Berechnungsverfahren kann dabei beispielsweise den geometrischen Schwerpunkt jeder Fläche erhöhter Helligkeit bestimmen oder auch ein Sekantenverfahren oder ein anderes Verfahren zur Berechnung des Mittelpunkts jeder Fläche verwenden. Dieser Mittelpunkt oder Schwerpunkt wird als Ortskoordinaten der Lichtquelle betrachtet.
d) Bestimmen, aus einem Schatten eines Fahrzeugs auf dem Umgebungsbild, der Art der Lichtquelle. Nach Berechnung der Ortskoordinaten jeder Lichtquelle werden die Schatten des Umgebungsbildes analysiert. Dabei kann die Kamera an dem Fahrzeug, welches Schatten wirft, angeordnet sein. Dabei wird jeder Lichtquelle ein Schatten zugeordnet. Weiterhin wird aus der Form des Schattens, nämlich aus der Parallelität der Ränder, die Art der Lichtquelle bestimmt.

Diese Art der Berechnung ist besonders vorteilhaft, weil die so gewonnenen Ergebnisse, nämlich die Kenntnis sowohl der Ortskoordinaten jeder Lichtquelle als auch deren Art, zu einer besonders realistischen Modellierung von Bildern der erweiterten Realität führen. Es ist außerdem vorteilhaft, dass mit diesem Verfahren auch nicht nur eine einzige Haupt-Lichtquelle, sondern mehrere Lichtquellen berücksichtigt werden können. Insbesondere ist für dieses Verfahren nicht mehr notwendigerweise ein omnidirektionales Umgebungsbild als Basis erforderlich. Weiterhin können diese Ergebnisse mit einem geringeren Rechenaufwand - d.h. einer kürzeren Rechenzeit oder mit einem langsameren Prozessor - gewonnen werden. Ferner entfallen aufwändige Modellierungen der Umgebung und/oder die Verwendung von Datenbanken mit bekannten Objekten.

In einer Ausführungsform weist die Erfindung einen zusätzlichen Schritt auf:
e) Anwenden eines glättenden Filters, insbesondere eines Kalman-Filters, auf die Ortskoordinaten der Lichtquelle.

Dies ist insbesondere vorteilhaft, um fehlerbehafte Abschätzungen aus den vorangegangenen Verfahrensschritten zumindest teilweise zu kompensieren. Ferner kann dieser Schritt vorteilhafterweise genutzt werden, wenn eine (z.B. zeitliche) Sequenz von Umgebungsbildern vorliegt, z.B. wenn die Kamera an oder in einem Fahrzeug angeordnet ist, das sich bewegt. Ein weiterer Vorteil des Verfahrens liegt darin, dass damit auch nicht-statische Szenen berechnet werden können.

In einer Ausführungsform besteht die Kamera aus einer Vielzahl von Kameras und ist insbesondere eine Surround-View-Kamera. Beispielsweise können in einer Ausführungsform vier Kameras an oder in einem Fahrzeug angeordnet sein. Die Anordnung kann je eine Kamera für jede Seite (links, rechts, vorne, hinten) vorsehen. Die Kameras müssen dabei nicht in einem genauen 90°-Winkel angeordnet sein. Diese Ausführungsform hat den Vorteil, dass die Ortskoordinaten der Lichtquelle als dreidimensionale Koordinaten berechnet werden können. Außerdem können die Kameras in ihrem Überlappungsbereich zur Korrektur des Umgebungsbildes der jeweils anderen Kamera verwendet werden.

In einer Ausführungsform wird einer der Schritte b), c), d) oder e) mehrfach durchgeführt. In einer Ausführungsform werden diese Schritte auf eine Mehrzahl von Lichtquellen angewendet.

In einer Ausführungsform sind die Flächen erhöhter Helligkeit des Umgebungsbildes weiß-gesättigt. Bei dem Wert "weiß-gesättigt" handelt es sich um den höchsten Helligkeitswert der verwendeten Farbskala, also beispielsweise um den Hexadezimalwert "FF" bei einer reinen Grauwerte-Skala oder um "FFFFFF" bei einer RGB-Skala. Diese Werte werden im Stand der Technik bei manchen Algorithmen vermieden, weil diese Werte zu Schwierigkeiten bei manchen Algorithmen führen können und/oder höhere Rechenzeiten verursachen können. Bei der vorliegenden Erfindung jedoch führt die Verwendung des Werts "weiß-gesättigt" zu einer Vereinfachung - und damit zu einer weiteren Beschleunigung - der Berechnungen.

In einer Ausführungsform weist Schritt c) folgende Teilschritte auf:
c1) Auswählen von drei Pixeln an dem Rand der Flächen erhöhter Helligkeit;
c2) Verbinden von je zwei Pixeln, aus den drei Pixeln, durch eine erste und eine zweite Gerade;
c3) Bilden einer ersten und einer zweiten Normalen, durch die Mitte der ersten und der zweiten Gerade;
c4) Bestimmen, aus einem Schnittpunkt der ersten und der zweiten Normalen, der Ortskoordinaten der Lichtquelle.

Erfindungsgemäss weist Schritt d) folgende Teilschritte auf:
d1) Zuordnen, aus den Rändern des Schattens des Fahrzeugs und den Ortskoordinaten der Lichtquelle, des Schattens zu der Lichtquelle.
d2) Bestimmen, aus der Parallelität der Ränder des Schattens der Art der Lichtquelle, nämlich einer Richtungs-Lichtquelle aus parallelen Rändern und einer Punkt-Lichtquelle aus nicht-parallelen Rändern.

Die Erfindung umfasst auch ein Steuergerät, das mit der Kamera verbunden ist und das eingerichtet ist, das genannte Verfahren durchzuführen. Das Steuergerät kann sich, wenn sich die Kamera oder die Kameras an einem Fahrzeug befinden, ebenfalls in dem Fahrzeug befinden. Ein Teil der Rechenleistung kann aber auch ausgelagert sein, z.B. auf einen externen Server.

Die Erfindung umfasst auch ein Programmelement, welches, wenn es auf dem genannten Steuergerät ausgeführt wird, das Steuergerät anweist, das genannte Verfahren durchzuführen.

Die Erfindung umfasst darüber hinaus ein computerlesbares Medium, auf dem das genannte Programmelement gespeichert ist.

Die Erfindung wird im Folgenden anhand von Zeichnungen bestimmter Ausführungsformen beschrieben, die vor allem als Verdeutlichung, nicht aber als Einschränkung, zu verstehen sind.

Dabei zeigen die Figuren:
**Fig. 1a** zeigt schematisch eine mögliche Szenerie, bei der das genannte Verfahren angewandt wird;
**Fig. 1b** zeigt schematisch ein Beispiel für die Berechnung von Ortskoordinaten einer Lichtquelle aus einem Umgebungsbild;
**Fig. 1c** zeigt schematisch ein Beispiel für die Berechnung von Art einer Lichtquelle;
**Fig. 2** zeigt ein Beispiel für ein Umgebungsbild, das mit einer Surround-View-Kamera aufgenommen wurde;
**Fig. 3** zeigt ein Beispiel für ein Verfahren zur Berechnung von Ortskoordinaten und der Art einer Lichtquelle.

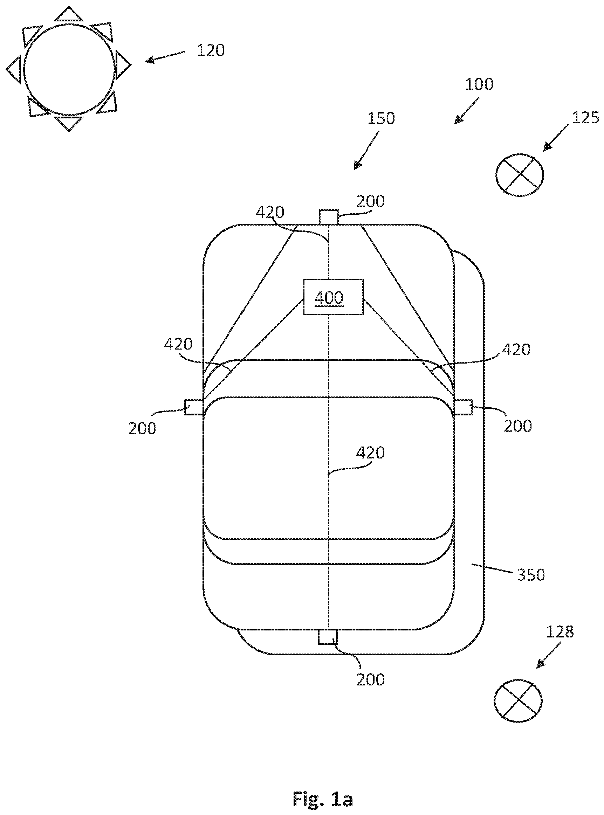

**Fig. 1a** zeigt schematisch einen Überblick über eine mögliche Szenerie, bei der das genannte Verfahren angewandt wird. Dabei weist die Umgebung 100 drei Lichtquellen 120, 125, 128 auf. Die Lichtquelle 120 ist dabei als Sonne, d.h. als eine Richtungs-Lichtquelle skizziert, die Lichtquellen 125 und 128 sind als Punkt-Lichtquellen skizziert. Weiterhin weist die Umgebung 100 ein Fahrzeug 150 auf, an dem vier Kameras 200 angeordnet sind. Ferner ist in dem Fahrzeug 150 ein Steuergerät 400 angeordnet, das mit den Kameras über je eine Verbindung 420 verbunden ist. Das Fahrzeug 150 wirft einen Schatten 350, der von der ersten Lichtquelle 120 verursacht wird. Die Schatten von den zweiten Lichtquellen 125 und 128 sind hier nicht dargestellt.

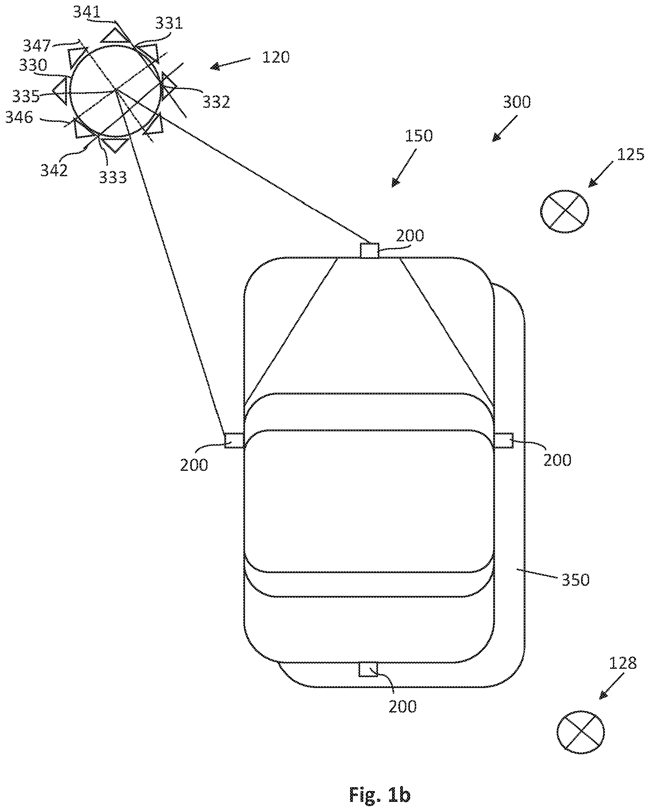

**Fig. 1b** zeigt ein Beispiel für die Berechnung von Ortskoordinaten einer Lichtquelle aus einem Umgebungsbild 300, das von den vier Kameras 200 aufgenommen wurde. Die Kameras 200 sind dabei in einem Umgebungsbild 300 üblicherweise nicht sichtbar; diese wurden hier nur zur Verdeutlichung eingefügt. Eine Art der Berechnung von Ortskoordinaten wird an der ersten Lichtquelle 120 gezeigt. Die Flächen erhöhter Helligkeit 310 der ersten Lichtquelle 120 weisen hier beispielsweise den Wert "weiß-gesättigt" auf. Aus dem Rand 330 der Flächen erhöhter Helligkeit 310 werden drei Pixel 331, 332, 333 ausgewählt und je zwei davon mit Geraden 341, 342 verbunden. Auf die Mitte dieser Geraden 341, 342 wird das Lot gefällt oder die Normalen 346, 347 konstruiert. Der Schnittpunkt 335 der Normalen 346 und 347 ist die errechnete Mitte 335 der Flächen erhöhter Helligkeit 310. Vorteilhafterweise kann hierbei genutzt werden, dass zwei Kameras 200 die erste Lichtquelle 120 erfasst haben. Denn dadurch ist es möglich, dreidimensionale Ortskoordinaten der ersten Lichtquelle 120 zu bestimmen.

Dieses Verfahren kann auch auf die zweiten Lichtquellen 125 und 128 angewendet werden. Damit werden aus dem Umgebungsbild 300 in

**Fig. 1b** die Ortskoordinaten der Lichtquellen 120, 125, 128 berechnet.

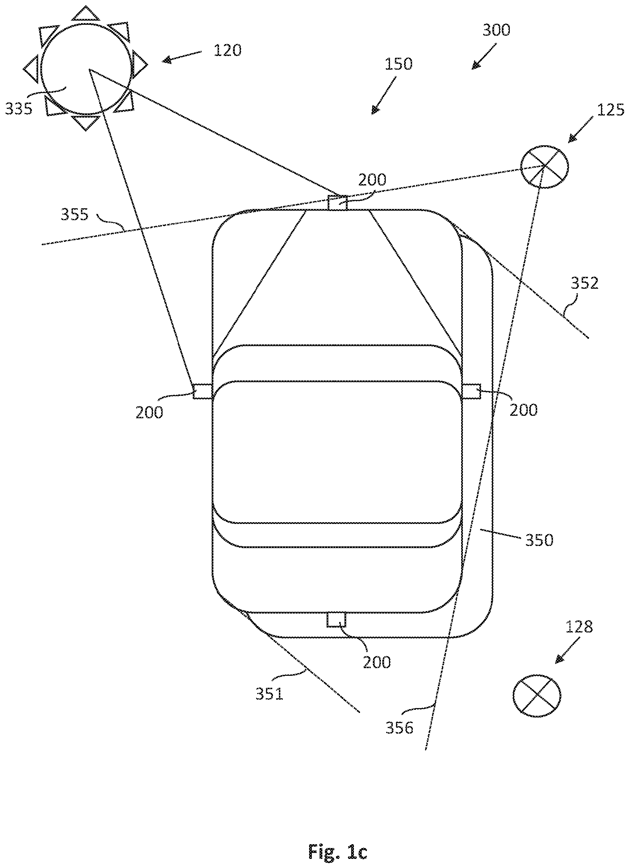

**Fig. 1c** zeigt ein Beispiel für die Berechnung der Art einer Lichtquelle aus dem Umgebungsbild 300. Dabei wird zunächst der Schatten 350 der ersten Lichtquelle 120 zugeordnet, deren Mittelpunkt 335 bereits errechnet wurde. Der Schatten 350 weist die Ränder 351, 352 auf. Dabei ist deutlich sichtbar, dass die Ränder 351, 352 parallel sind. Daher ergibt die Berechnung, dass die erste Lichtquelle 120 eine Richtungs-Lichtquelle ist.

Der Schatten, der von der zweiten Lichtquelle 125 - und, analog, auch von der zweiten Lichtquelle 128 - geworfen wird, weist deutlich unterschiedliche Ränder 355, 356 auf. Da diese Ränder 355, 356 nicht parallel sind und die Ränder 355, 356 der zweiten Lichtquelle 125 zugeordnet werden können, kann diese zweite Lichtquelle 125 als eine Punkt-Lichtquelle identifiziert werden. Analog dazu wird auch die zweite Lichtquelle 128 als eine Punkt-Lichtquelle identifiziert (Schatten nicht dargestellt).

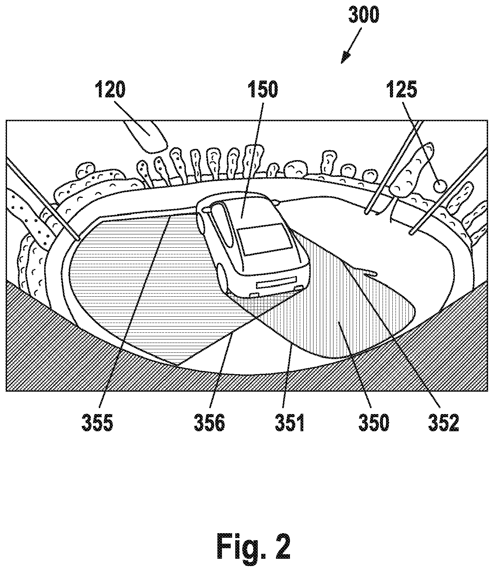

**Fig. 2** zeigt ein Beispiel für ein Umgebungsbild 300, das mit einer Surround-View-Kamera aufgenommen wurde. Dabei ist deutlich eine erste Lichtquelle 120 und eine zweite Lichtquelle 125 sichtbar. Die erste Lichtquelle 120 weist einen Helligkeitswert "weiß-gesättigt" auf. Es ist auch sichtbar, dass es sich bei den Flächen erhöhter Helligkeit, die von der ersten Lichtquelle 120 gebildet werden, nicht notwendigerweise um einen Kreis handeln muss, um das erste Berechnungsverfahren durchführen zu können. Weiterhin ist auf dem Umgebungsbild 300 ein Fahrzeug 150 sichtbar. Das Fahrzeug 150 wirft einen Schatten 350, der von der ersten Lichtquelle 120 verursacht wird. Der Schatten 350 weist die Ränder 351, 352 auf. Dabei ist deutlich sichtbar, dass die Ränder 351, 352 parallel sind. Daher ergibt die Berechnung, neben den Ortskoordinaten der Lichtquelle, dass die erste Lichtquelle 120 eine Richtungs-Lichtquelle ist.

Der Schatten, der von der zweiten Lichtquelle 125 geworfen wird, weist die Ränder 355, 356 auf. Da diese Ränder 355, 356 nicht parallel sind und diese Ränder 355, 356 der zweiten Lichtquelle 125 zugeordnet werden können, kann diese zweite Lichtquelle 125 als eine Punkt-Lichtquelle identifiziert werden.

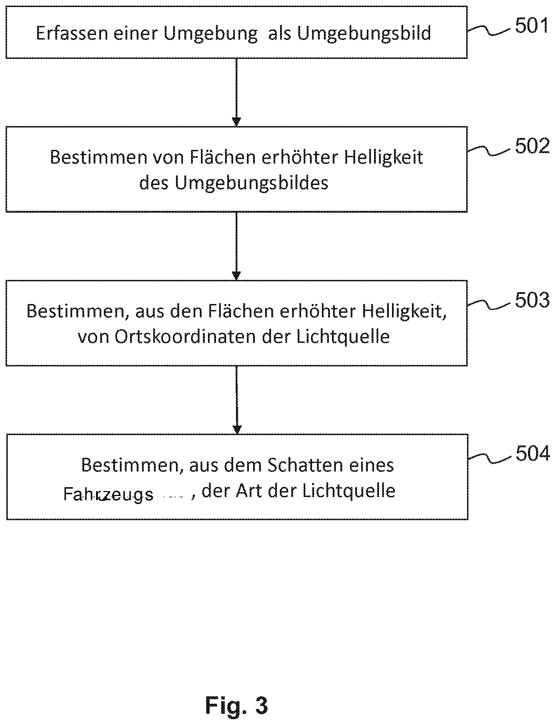

**Fig. 3** zeigt ein Beispiel für ein Verfahren zur Berechnung von Ortskoordinaten und der Art einer Lichtquelle.

Dabei wird in einem ersten Schritt 501 eine Umgebung 100 als Umgebungsbild 300 erfasst. Dies geschieht mittels einer Kamera 200. Diese Kamera 200 kann auch als Surround-View-Kamera ausgeführt sein und mehrere physische Kameras 200 umfassen, die anschießend zu einem Gesamt-Umgebungsbild 300 zusammengefügt werden.

In einem zweiten Schritt 502 werden die Flächen erhöhter Helligkeit 310 des Umgebungsbildes 300 bestimmt, nämlich eine Menge von Pixeln, deren Helligkeit eine vordefinierte Schwelle überschreitet. In einer Ausführungsform können die Flächen erhöhter Helligkeit 310 des Umgebungsbildes weiß-gesättigt sein. Wenn mehrere Lichtquellen 120, 125, 128 in dem Umgebungsbild 300 abgebildet sind, dann werden für jede einzelne Lichtquelle 120, 125, 128 die Flächen erhöhter Helligkeit 310 bestimmt.

In einem dritten Schritt 503 werden aus den Flächen erhöhter Helligkeit 310, nach einem ersten Berechnungsverfahren die Ortskoordinaten 335 jeder einzelnen Lichtquelle 120, 125, 128 bestimmt. Das erste Berechnungsverfahren kann dabei beispielsweise den geometrischen Schwerpunkt jeder Fläche erhöhter Helligkeit bestimmen oder auch ein Sekantenverfahren oder ein anderes Verfahren zur Berechnung des Mittelpunkts jeder Fläche verwenden. Dieser Mittelpunkt oder Schwerpunkt wird als Ortskoordinaten der Lichtquelle betrachtet.

In einem vierten Schritt 504 werden aus dem Schatten 350 eines Fahrzeugs 150 die Art der Lichtquelle 120, 125, 128 bestimmt. Nachdem also die Ortskoordinaten jeder Lichtquelle berechnet sind, werden die Schatten des Umgebungsbildes analysiert. Dabei kann die Kamera an dem Fahrzeug, welches Schatten wirft, angeordnet sein.

Dabei wird jeder Lichtquelle 120, 125, 128 ein Schatten zugeordnet. Weiterhin wird aus der Form des Schattens, nämlich aus der Parallelität der Ränder, die Art der Lichtquelle bestimmt.

Ergänzend sei darauf hingewiesen, dass "umfassend" und "aufweisend" keine anderen Elemente oder Schritte ausschließt und die unbestimmten Artikel "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

### Liste der Bezugszeichen

- 100: Umgebung
- 120: erste Lichtquelle
- 125, 128: zweite Lichtquellen
- 150: Fahrzeug
- 200: Kamera
- 300: Umgebungsbild
- 320, 322, 324: Flächen erhöhter Helligkeit
- 330: Rand der Flächen erhöhter Helligkeit
- 331, 332, 333: Pixel aus dem Rand
- 335: errechnete Mitte der Flächen erhöhter Helligkeit
- 341, 342: Geraden
- 346, 347: Normalen
- 350: Schatten der ersten Lichtquelle
- 351, 352: Rand des Schattens der ersten Lichtquelle
- 355, 356: Rand des Schattens der zweiten Lichtquelle
- 400: Steuergerät
- 420: Verbindung Kamera - Steuergerät
- 501 bis 504: Schritte des Verfahrens

## Patentansprüche

1. Verfahren zur Abschätzung von Ortskoordinaten und einer Art einer Lichtquelle (120, 125, 128) in einem Umgebungsbild (300), wobei die Art der Lichtquelle (120, 125, 128) eine Punkt-Lichtquelle oder eine Richtungs-Lichtquelle sein kann, mit den Schritten:
a) Erfassen einer Umgebung (100) als Umgebungsbild (300), mittels einer Kamera (200);
b) Bestimmen von Flächen erhöhter Helligkeit (310) des Umgebungsbildes (300), nämlich einer Menge von Pixeln, deren Helligkeit eine vordefinierte Schwelle überschreitet;
c) Bestimmen, aus den Flächen erhöhter Helligkeit (310), nach einem ersten Berechnungsverfahren, von Ortskoordinaten (335) der Lichtquelle (120, 125, 128);
d) Bestimmen, aus einem Schatten (350) eines Fahrzeugs (150) auf dem Umgebungsbild (300), der Art der Lichtquelle (120, 125, 128), mit den Teilschritten:
d1) Zuordnen, aus Rändern (351, 352, 355, 356) des Schattens (350) des Fahrzeugs (150) und den Ortskoordinaten (335) der Lichtquelle (120, 125, 128), des Schattens (350) zu der Lichtquelle (120, 125, 128);
d2) Bestimmen, aus der Parallelität der Ränder (351, 352, 355, 356) des Schattens (350), der Art der Lichtquelle (120, 125, 128), nämlich einer Richtungs-Lichtquelle aus parallelen Rändern (355, 356) und einer Punkt-Lichtquelle aus nicht-parallelen Rändern (355, 356).

2. Verfahren nach Anspruch 1, mit dem zusätzlichen Schritt:
e) Anwenden eines glättenden Filters, insbesondere eines Kalman-Filters, auf die Ortskoordinaten der Lichtquelle (120, 125, 128).

3. Verfahren nach Anspruch 1 oder 2,
wobei die Kamera (200) aus einer Vielzahl von Kameras besteht und insbesondere eine Surround-View-Kamera ist.

4. Verfahren nach einem der vorangehenden Ansprüche,
wobei einer der Schritte b), c), d) oder e) mehrfach durchgeführt und auf eine Mehrzahl von Lichtquellen (120, 125, 128) angewendet wird.

5. Verfahren nach einem der vorangehenden Ansprüche,
wobei die Flächen erhöhter Helligkeit (310) des Umgebungsbildes weiß-gesättigt sind.

6. Verfahren nach einem der vorangehenden Ansprüche, wobei Schritt c) folgende Teilschritte aufweist:
c1) Auswählen von drei Pixeln (331, 332, 333) an dem Rand der Flächen erhöhter Helligkeit (310);
c2) Verbinden von je zwei Pixeln (331, 332, 333), aus den drei Pixeln (331, 332, 333), durch eine erste (341) und eine zweite (342) Gerade;
c3) Bilden einer ersten (346) und einer zweiten (347) Normalen, durch die Mitte der ersten (341) und der zweiten (342) Gerade;
c4) Bestimmen, aus einem Schnittpunkt (335) der ersten (346) und der zweiten (347) Normalen, der Ortskoordinaten (335) der Lichtquelle (120, 125, 128).

7. Steuergerät (400), das mit der Kamera (200) gemäß einem der vorangehenden Ansprüche verbunden ist und das eingerichtet ist, ein Verfahren nach einem der vorangehenden Ansprüche durchzuführen.

8. Programmelement, welches, wenn es auf dem Steuergerät (400) nach Anspruch 7 ausgeführt wird, das Steuergerät (400) anweist, das Verfahren nach einem der Ansprüche 1 bis 6 durchzuführen.

9. Computerlesbares Medium, auf dem ein Programmelement nach Anspruch 8 gespeichert ist.

## Claims

1. Method for estimating spatial coordinates and a type of a light source (120, 125, 128) in an environment image (300), wherein the type of the light source (120, 125, 128) can be a point light source or a directional light source, having the steps of:
a) capturing an environment (100) in the form of an environment image (300) by means of a camera (200);
b) determining surfaces of increased brightness (310) of the environment image (300), specifically a set of pixels having a brightness that exceeds a predefined threshold;
c) determining spatial coordinates (335) of the light source (120, 125, 128) on the basis of the surfaces of increased brightness (310) in accordance with a first calculation method;
d) determining the type of the light source (120, 125, 128) on the basis of a shadow (350) of a vehicle (150) on the environment image (300), having the substeps of:
d1) assigning the shadow (350) of the vehicle (150) to the light source (120, 125, 128) on the basis of peripheries (351, 352, 355, 356) of the shadow (350) and the spatial coordinates (335) of the light source (120, 125, 128);
d2) determining the type of the light source (120, 125, 128) on the basis of the parallelism of the peripheries (351, 352, 355, 356) of the shadow (350), specifically a directional light source on the basis of parallel peripheries (355, 356) and a point light source on the basis of non-parallel peripheries (355, 356).

2. Method according to Claim 1, having the additional step of:
e) applying a smoothing filter, in particular a Kalman filter, to the spatial coordinates of the light source (120, 125, 128).

3. Method according to Claim 1 or 2,
wherein the camera (200) consists of a multiplicity of cameras and is in particular a surround-view camera.

4. Method according to one of the preceding claims,
wherein one of steps b), c), d) or e) is performed multiple times and applied to a plurality of light sources (120, 125, 128).

5. Method according to one of the preceding claims,
wherein the surfaces of increased brightness (310) of the environment image are white saturated.

6. Method according to one of the preceding claims,
wherein step c) has the following substeps:
c1) selecting three pixels (331, 332, 333) at the periphery of the surfaces of increased brightness (310);
c2) connecting in each case two pixels (331, 332, 333) of the three pixels (331, 332, 333) by a first (341) and a second (342) straight line;
c3) forming a first (346) and a second (347) normal through the centre of the first (341) and the second (342) straight line;
c4) determining the spatial coordinates (335) of the light source (120, 125, 128) on the basis of an intersection point (335) of the first (346) and the second (347) normal.

7. Control device (400), which is connected to the camera (200) according to one of the preceding claims and is configured to carry out a method according to one of the preceding claims.

8. Program element, which, when it is executed on the control device (400) according to Claim 7, instructs the control device (400) to carry out the method according to one of Claims 1 to 6.

9. Computer-readable medium, on which a program element according to Claim 8 is stored.

## Revendications

1. Procédé pour évaluer des coordonnées de lieu et un type d'une source de lumière (120, 125, 128) dans une image d'environnement (300), le type de la source de lumière (120, 125, 128) pouvant être une source de lumière ponctuelle ou une source de lumière directionnelle, comprenant les étapes suivantes :
a) acquisition d'un environnement (100) en tant qu'image d'environnement (300), au moyen d'une caméra (200) ;
b) détermination de surfaces ayant une luminosité accrue (310) de l'image d'environnement (300), à savoir une quantité de pixels dont la luminosité dépasse un seuil prédéfini ;
c) détermination, à partir des surfaces ayant une luminosité accrue (310), selon un premier procédé de calcul, de coordonnées de lieu (335) de la source de lumière (120, 125, 128) ;
d) détermination, à partir d'une ombre (350) d'un véhicule (150) sur l'image d'environnement (300), du type de la source de lumière (120, 125, 128), avec les étapes partielles suivantes :
d1) association, à partir des bords (351, 352, 355, 356) de l'ombre (350) du véhicule (150) et des coordonnées de lieu (335) de la source de lumière (120, 125, 128), de l'ombre (350) à la source de lumière (120, 125, 128) ;
d2) détermination, à partir du parallélisme des bords (351, 352, 355, 356) de l'ombre (350), du type de la source de lumière (120, 125, 128), à savoir une source de lumière directionnelle à partir de bords parallèles (355, 356) et une source de lumière ponctuelle à partir de bords non parallèles (355, 356).

2. Procédé selon la revendication 1, comprenant l'étape supplémentaire suivante :
e) application d'un filtre lissant, notamment un filtre de Kalman, sur les coordonnées de lieu de la source de lumière (120, 125, 128).

3. Procédé selon la revendication 1 ou 2,
la caméra (200) se composant d'une pluralité de caméras et notamment d'une caméra à vision périphérique.

4. Procédé selon l'une des revendications précédentes, l'une des étapes b), c), d), ou e) étant exécutée plusieurs fois et appliquée sur une pluralité de sources de lumière (120, 125, 128).

5. Procédé selon l'une des revendications précédentes, les surfaces à luminosité accrue (310) de l'image d'environnement étant saturées en blanc.

6. Procédé selon l'une des revendications précédentes, l'étape c) comprenant les étapes partielles suivantes :
c1) sélection de trois pixels (331, 332, 333) au niveau du bord des surfaces à luminosité accrue (310) ;
c2) liaison respectivement de deux pixels (331, 332, 333) parmi les trois pixels (331, 332, 333) par une première (341) et une deuxième droite (342) ;
c3) formation d'une première (346) et d'une deuxième normale (347) à travers le centre de la première (341) et de la deuxième droite (342) ;
c4) détermination, à partir d'un point d'intersection (335) de la première (346) et de la deuxième normale (347), des coordonnées de lieu (335) de la source de lumière (120, 125, 128).

7. Contrôleur (400), qui est relié à la caméra (200) selon l'une des revendications précédentes et qui est conçu pour mettre en œuvre un procédé selon l'une des revendications précédentes.

8. Élément de programme qui, lorsqu'il est exécuté sur le contrôleur (400) selon la revendication 7, donne l'instruction au contrôleur (400) de mettre en œuvre un procédé selon l'une des revendications 1 à 6.

9. Support lisible par ordinateur, sur lequel est enregistré un élément de programme selon la revendication 8.
